# EUROPEAN PATENT APPLICATION

(11) **EP 1 607 845 A1**
(43) Date of publication of application: **21.12.2005**
(21) Application number: 04014306.7
(22) Date of filing: 18.06.2004
(51) Int. Cl.: G06F 3/033

(54) **Method and apparatus for transitions in a user interface**

(71) Applicant: Sony Ericsson Mobile Communications AB, 221 88 Lund (SE)
(72) Inventor: Foxenland, Eral, 254 41 Helsingborg (SE)
(74) Representative: Asketorp, Göran

(57) **Abstract**

A method and an electronic device of operating an electronic device (1) comprising an input device (2) and an output device (3), the method comprising: generating one or several parameters based on information from the input device in connection with a transition from a first state to a second state of the output device (3), wherein said parameters affect the length of a transition time period between said first and second state.

## Description

### Technical Field of the Invention

The present invention relates a method of operating an electronic device comprising an input device and an output device wherein parameters are generated based on information from the input device to affect the length of a transition time period between first and second states of the output device. The invention also relates to an electronic device, which is adapted to generate parameters based on information from an input device to affect the length of transition time periods between states an output device in dependence of interaction with the input device.

### Description of Related Art

In electronic devices having a user interface, the user may interact with the electronic device by inputting information and commands, and receiving information presented in response thereto. The user may input information e.g. by means of a keys of a keyboard or a keypad, a mouse, a scroll button, a voice recognition unit, a touch pad, a touch screen, etc., which are jointly denoted input interface or input device. Information may be presented to the user through a display, a loudspeaker, illuminating means, such as a LED, etc., which are jointly denoted output interface or input device.

The information presented by the output interface, such as the display, may be presented in different views or display images. The display images may comprise selectable items, such as icons or character-based links presented in a menu. The user may select any of a plurality of items by means of the input interface by navigating through a number of items presented in the same display image. Once an item is selected, a transition from the currently presented display image to a following display image is made. Selecting an item may entail starting a certain application, or a sub-application of the main application. For example, in a mobile telephone a plurality of icons, which are links to various applications, such as a camera, a messaging, an organizer, a phone book, a communication, a settings, a media player, an entertainment, and/or a internet services icon, may be presented. The user may select by means of the input interface one of the applications, e.g. messaging, wherein a transition to a second display image is made. In the second display image several selectable sub-applications may appear in a menu, possibly accompanied by an icon. The application messaging may e.g. comprise the sub-application "write new", which in turn comprises the sub-applications "text message" (SMS message (Short Message Service)) and "picture message" (MMS (Multimedia Messaging Service)).

During a transition, various effects may be displayed, such as a virtual blind, or transition events, such as presenting a sandglass denoting the waiting time or simply a blank display image. The length of the transition time may vary between different transitions, but is preset and static. Sometimes it is also impossible to speed up the transition. However, static and preset transition time periods may be disadvantageous, since an effect rendered during the transition may be appreciated by some users, but be perceived as very disturbing to other users. If one and the same transition event is rendered during each transition, the transition event will be played several times when the user moves between several display images before arriving at a desired image or application, which also may be irritating, especially if it is impossible to speed up each transition event.

### Summary of the Invention

It is an object of the invention to provide a method and apparatus, which provide a more flexible transition time period for a transition between a first and a second state of an output device of the apparatus compared to the static transition time periods according to the prior art.

According to a first aspect, the object is achieved according to the invention by a method of operating an electronic device comprising an input device and an output device. The method comprises generating one or several parameters based on information from the input device in connection with a transition from a first state to a second state of the output device. The parameters affect the length of a transition time period between said first and second state.

The information may comprise information of selections of selectable items, which selections have been made by means of the input device. The items may be presented within views on a display of the electronic device.

The information may comprise information of a sequence of selections of selectable items, which has been made by means of the input device. The items may be presented within views on a display of the electronic device (1). The generating of the parameters may comprise comparing the sequence with at least one stored sequence of previously executed selections, if the sequence match any stored sequence determining the number of times said stored sequence has been executed, which number of times may be one of the parameters.

The generation of the parameters may comprise determining an interaction frequency of the input device during a predetermined time period, which interaction frequency may be one of the parameters.

The generation of the parameters may comprises determining a time period during which the output device was in the first state before a request for the transition to the second state was received, which time period may be one of the parameters.

The generation of the parameters may comprise determining a mean value based on the time period during which the output device was in the first state and a predetermined number of previous states before the request for the transition to the second state was received, which mean value may be one of the parameters. The mean value may be weighted and the generation of the parameters may comprise weighting the time periods such that the time period during which the output device was in the first state has the largest weight.

The generation of the parameters may comprise determining the amount or type of information in a first view presented on a display when the output device is in the first state, which amount or type of information may be an additional parameter to affect the length of the transition time period.

The generated parameters may be used to alter the rendering time of a transition event. Alternatively, the generated parameters may be used to select one of a plurality of transition events to be rendered during the transition from the first to the second state. Each of the plurality of transition events may have a specific rendering time period.

The output device may be selected from the group comprising: a graphical display, a touchscreen, LEDs, a loudspeaker, and a vibrator.

The input device may be selected from the group comprising: a keyboard, a keypad, discrete buttons, a touchscreen, LEDs, a microphone, a joystick, a rocker pad, a computer mouse, a remote electronic device and a computer.

According to a second aspect of the object is achieved according to the invention by an electronic device, comprising an input device, an output device, and a controller, which is adapted to generate one or several parameters that are based on information from the input device. The parameters are generated in connection with a request for a transition from a first state to a second state of the output device. The parameters will during operation of the electronic device affect the length of a transition time period for the transition from the first to the second state.

The electronic device may also comprise a registration unit, which is adapted to register the information. The information may be based on at least one selection of a selectable item when the selection is executed by means of the input device and the item is displayed within one or several views on a display of the electronic device. The registration unit may be adapted to register the information, which may be based on a sequence of selections of selectable items when the selections are executed by means of the input device and the items are displayed within one or several views on a display of the electronic device. The controller may be adapted to compare the sequence with at least one stored sequence of previously executed selections, and if said specific sequence match any stored sequence to determine the number of times said stored sequence has been executed. The number of times may be one of the parameters.

The controller may also be adapted to determine, based on the information, an interaction frequency of the input device during a predetermined time period. The interaction frequency may be one of the parameters.

Furthermore, the controller may be adapted to determine a time period during which the output device was in the first state before the request for the transition to the second state was received. The time period may be one of the parameters.

The controller may be adapted to determine a mean value based on the time period during which the output device was in the first state and a predetermined number of previous states before the request for the transition from the first to the second state was received. Also, the controller may be adapted to weight the mean value such that the time period during which the output device was in the first state has the largest weight.

The controller may be adapted to determine the amount or type of information presented in a display when the output device is in the first state. The amount or type of information may be an additional parameter to affect the length of the transition time period.

The controller may be adapted to use the generated parameters to select one of a plurality of transition events to be displayed during the transition from the first to the second state. Each of the plurality of transition events may have a specific rendering time period.

The electronic device may comprise a processing unit, which is adapted to use the generated parameters to alter the length of the rendering time of a transition event.

The input device may be a graphical display, a touchscreen, LEDs, a loudspeaker, or a vibrator.

The output device may be a keyboard, a keypad, discrete buttons, a touchscreen, LEDs, a microphone, a joystick, a rocker pad, a vibrator, an input member of a remote electronic device, a computer mouse or a computer.

The electronic device may be a mobile radio terminal, a pager, a communicator, an electronic organizer, a smartphone, a personal digital assistant, a mobile telephone, or a computer.

According to a third aspect the object is achieved according to the invention by a computer program product comprising computer program code means to execute the method according to the method of the invention when the computer program code means is run by an electronic device having computer capabilities. The computer program code means may be embodied on a computer readable medium.

It is an advantage that the transition time periods according to the invention may be affected by the information from the input device, such as interaction with the input device. Thus, the transition events may be suitably tailored depending on how the user navigates through menus or views, wherein the electronic device is easier to handle.

Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a front view of an electronic device according to the invention embodied as a mobile telephone;
Fig. 2 is a block diagram of certain components of the electronic device according to the invention;
Figs. 3a-3b are block diagrams illustrating embodiments for applying the parameters to affect he length of the transition time period;
Figs. 4a-4b are block diagrams illustrating embodiments for applying the parameters to affect the length of the transition time period; and
Fig. 5 is a flow-chart of one embodiment of the method according to the invention.

### Detailed Description of Embodiments

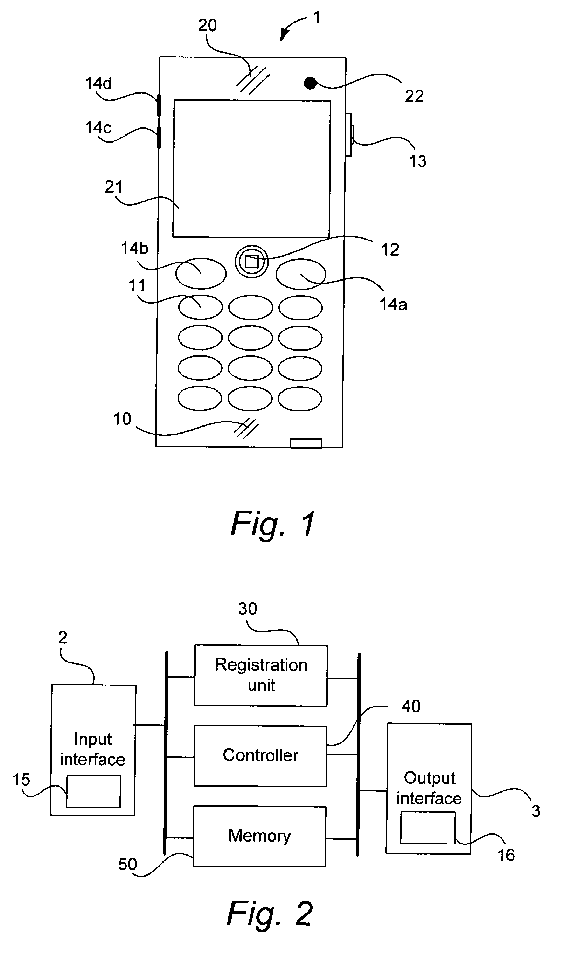

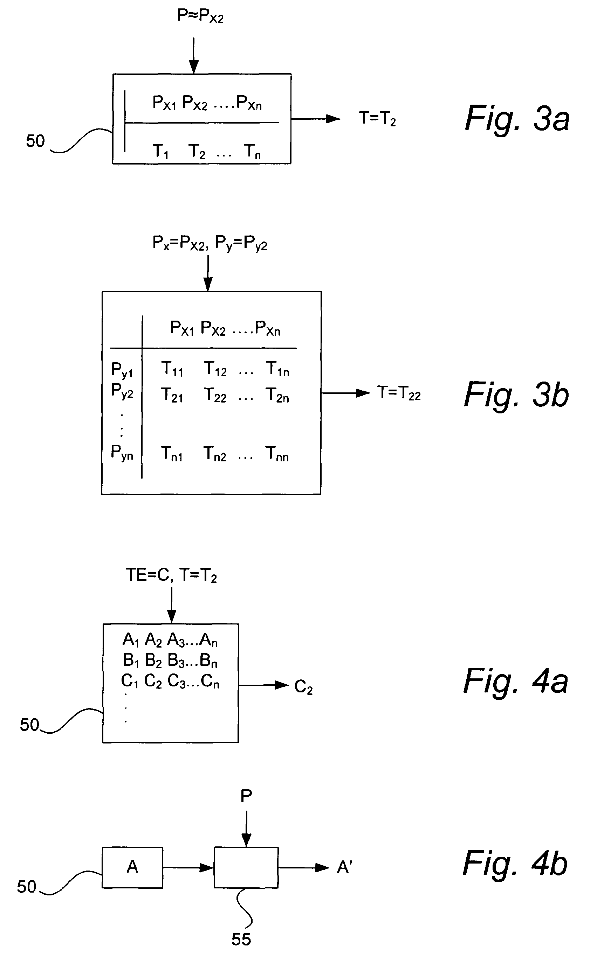

Fig. 1 illustrates an electronic device embodied as a mobile telephone 1. The present invention may be implemented into a wide variety of electronic devices, which have an input interface or input device 2 (Fig. 2) for inputting information and commands therein and an output interface or input device 3, (Fig. 3) for displaying or rendering various items. The electronic device may e.g. be a mobile radio terminal, a pager, a communicator, an electronic organizer, a smartphone, a personal digital assistant, a computer, etc. Reference will be made to a mobile telephone 1 below, which is only for illustrative purposes and should not be considered as limiting.

According to the invention, the length of a transition time period for a transition from a first to a second state of the output device 3 is affected by one or several parameters, which are adaptively generated based on information from the input device 2. The information may be based on interaction between the user of the mobile telephone 1 and the input device. During the transition time period, a transition event may be rendered by means of the output device. The parameter may e.g. reflect the navigation speed between different states of the output device 3, such as views or menus presented on a display.

The input device 2 of the mobile telephone may be selected from the group comprising, a microphone 10, an alphanumeric keypad 11, a joystick 12 or rocker pad, a scroll button 13, and one or several discrete keys or buttons 14a, 14b, 14c, 14d, e.g. dedicated for certain applications or for making selections among a plurality of selectable items presented within views on a display 21. The mobile telephone 1 may also comprise an accessory connector to which external electronic devices having input members may be connected, such as a camera, a joystick, etc. The input device may also form part of a remote electronic device, such as another communication device, which has an input member, e.g. a mouse of a computer. The remote electronic device may be connected to the mobile telephone by means of a wire or a wireless connection, such as short range radio link, e.g. a Bluetooth® link. A mouse and/or a keyboard connected to a computer may be an input member thereof. In Fig. 2, the input device 2 is shown jointly by reference numeral 2.

The input device 2 may also comprise a touchpad for controlling a cursor and selecting items presented on a screen. Alternatively or additionally, the input device 2 comprises a touch screen, wherein selections may be made directly on the screen or display by means of a stylus. The touch screen may be separate or form part of both the input device 2 and the output device 3.

Furthermore, the input device may comprise a voice recognition unit 15. The voice recognition unit 15 is connected to the microphone 10 such that the user may record spoken commands that are associated with certain applications or commands, such as making selections or answering an incoming call.

The output device 3 may comprise a loudspeaker 20, a display 21, one or several LEDs (Light Emitting Diode) 22, illumination means, for illuminating e.g. the keypad 11, a vibrator 16, etc. The output device 3 may also comprise various means and circuitry for rendering transition events, such as a graphical processor unit, an mp3 player, a video sequence player, etc. The output device is shown jointly by reference numeral 3 in Fig. 2.

The various means of the input device 2 and the output device 3 presented above should be considered as being exemplary rather than limiting. The input device and the output device may equally comprise only one each of the examples given as well as other not exemplified.

Fig. 2 illustrates certain components or units of the mobile telephone 1, which are involved in generating the parameters and affect the length of the transition time periods according to the invention. The input device 2 is connected to a registration unit 30, which is adapted to register interaction between the user and the input device 2, as will be explained below. A controller 40 is connected to the input device 2 and the output device 3. The controller 40 is adapted to receive a request for a transition from a first state of the output device 3 to a second state of the output device 3. Also, the controller 40 is adapted to adaptively generate one or several parameters based on registered interaction, which parameter will affect the length of the transition time period, as will be further explained below.

The controller 40 may be provided by a processor, such as a central processing unit (CPU). The registration unit may be software implemented, e.g. as a separate application run by the controller 40. However, the registration unit 30 may also be provided as a separate hardware unit, such as a CPU, an integrated circuit, such as an ASIC (Application Specific Integrated Circuit) or a FPGA (Field Programmable Gate Array).

Furthermore, the mobile telephone 1 may comprise various memories, such as a RAM (Random Access Memory), and a ROM (Read Only Memory) shown collectively as memory unit 50. In the memory, at least one transition event may be stored. The memory 50 may be connected to the controller 40, the output device 3 and the registration unit 30.

A transition event may be a visual, an audio, or a vibrating transition event, such as animated or moving graphics, a video sequence, such as a MPEG4 file, to be displayed by means of the display 21, sound, such as an MP3 (MPEG-1 Audio Layer-3) or MIDI (Musical Instrument Digital Interface) file rendered by the loudspeaker 20, illumination of the LEDs 22 or the illumination means, etc. Consequently, the transition event to be rendered during a transition from a first state to a second state of the output device 3 does not necessarily need to be rendered by means of the display. Different states of the output interface may e.g. by illuminating the LEDs 22 in a different sequence.

A user of the mobile telephone 1 may interact with the input device 2. The registration unit 30 registers information from the input device 2, which may be based on interaction between the user and the input device 2. The interaction may comprise selections between items presented within menus of different views on the display 21. In a first view, a plurality of selectable items may be displayed, such as icons or character-based links, which are links to various applications, e.g. a camera, a messaging, a note book, a phone book, a communication, a settings, a media player, an entertainment, and/or an internet services application. The user interacts with the input device by selecting one of the applications e.g. by navigating between the symbols by means of the joystick 12 and selecting said application by means of pushing the selection button 14b when the desired application is selectable. Alternatively, the user points on the selected icon by means of the stylus if it is presented on a touch screen. In a second view, e.g. in the messaging application, several items or links to sub-applications may appear in a list or menu, possibly accompanied by an icon. Each sub-application may be selectable. The user may scroll through the list, e.g. by means of the joystick 12 and make his selection by pushing the selection button 14b, such as when the chosen application is highlighted or appears in a different color. Each sub-application may have one or several sub-applications. The application messaging may e.g. comprise the sub-application "write new", which in turn comprises the sub-applications "text message" (SMS message (Short Message Service)) and "picture message" (MMS (Multimedia Messaging Service)). The user may issue a request for a transition from a first to a second state by interacting with the input device 2, such as selecting any of the applications or any of the sub-applications in a first view, e.g. by clicking a mouse button, pressing the selection key 14b, etc.

The registration unit 30 is adapted to register information, which is based on a selection that has been made by means of the input device 2 when the output device 3 is in a first state. When the next selection of an application or request for a transition to a second state is made it is information thereof is registered, and a parameter to affect the length of the transition time period may be generated, such as the time period during which the first view was displayed. Said time period may be the parameter to affect the length of the transition time period, as will be explained below. Each registered selection may be a request for a transition from a first or current state to a second or following state.

The registration unit 30 may register one or several set of parameters, which may be used for generating the parameters that is used to affect the length of the transition time period, such as the time of a request for a transition to a selected state, the view in which the request was made etc. The parameters may e.g. be (registration time, from view X, to view Y).

Registered interactions may e.g. be executed selections or choices, which the user has made within views presented on the display 21 and which are registered by the registration unit 30.

Furthermore, a specific sequence of selections made by means of the input device 2 among a plurality of items may be determined. The specific sequence may be compared by the controller 40 with at least one sequence of selections, which is stored in the memory 50. The stored sequence of selections may relate to a previous selected or executed sequence of selections, which has been registered when the user previously has made the selections of the stored sequence. Also, the number of times the set of selections corresponding to the stored sequence of selections has been previously registered may be determined. Thus, the controller 40 may determine the number of times a user has navigated through the views to select a desired application or sub-application, which number of times may be one of the parameters to affect the length of the transition time period.

The parameter to affect the length of the transition time period may be an interaction frequency parameter. The registration unit 30 may register information with regard to the number of requests for a transition from a first to a second state that has been received during a predetermined time period. Then, the controller 40 may determine the interaction frequency based thereon. The interaction frequency parameter may, but need not, incorporate the executed selection that triggered the generation of the parameter.

Alternatively or additionally, the parameter to affect the length of the transition time period may be a time period during which a specific view was displayed or rendered before the request for a transition from a first to a second state was received. The registration unit 40 may register the start time, or start a stopwatch, when the display of the specific view is initiated. When the request for a transition to a second state is received, the start time is registered, or the stopwatch stopped, wherein the controller 30 may generate the display time of the specific view. The display time may be one of the parameters to affect the length of the transition time period.

The time period during which the output device 2 is in a specific state may be stored in the memory 50 during a predetermined time period. Thus, a mean value based on the time period the output device 3 was in the first state and a predetermined number of previous states may be generated by the controller 40, which may be a parameter to affect the length of the transition time period.

Alternatively the mean value may be a weighted mean value. The controller 40 may be adapted to give a specific state a larger weight than other display times, on which the mean value are based. For example, the displaying of the latest view may be of more relevance to the user, wherein the corresponding display time is given a larger weight, and each previous display time is smaller than the following. However, other weighting schemes are possible, such as giving the display time of a first view in a sequence of views the largest weight. Weighting the mean value is an advantage if the last state of the output device 3 is of more importance to the user, wherein the intelligibility of the output device will be further increased.

The controller 40 may also be adapted to determine the amount or type of information presented in a specific view, such as a currently displayed, a previous or a requested view. The number of selectable applications or sub-applications in the view may e.g. indicate the amount of information. Different types of information displayed in a view may e.g. be icons, pictures, and characters. The type or amount of information may be used as an additional parameter to affect the length of the transition time period. If a certain view for example comprises more selectable items than may be displayed simultaneously, the length of the transition time period may for the following transition between a first and a second view may be longer than if all items of a view may be displayed simultaneously. This may be the case if e.g. the user has to scroll through the items of the view to display them.

It is also possible to dedicate a specific, a minimum, or a maximum length of the transition time period between certain states. E.g. state "A" may have a restriction that a transition to state "B" should have a length of minimum 5 s. Thus, the registration unit 30 may register that in the current state view "A" is presented and that a request is received for transition to a second state wherein view "B" presented. Then, the controller 40 may be adapted to generate a transition time period having a length of minimum 5 s. The actual length of the transition time period may be dependent on information from the input device 2.

Fig. 3a illustrates how the generated parameter to affect the length of the transition time period may be utilized. The generated parameter P may be mapped against a plurality of parameters associated with transition time periods, which are stored in the memory 50. In the table of Fig. 3 P_{X} denotes a certain predetermined parameter, such as a time period during which the output device 3 was in the current state or a mean value of previously states as presented above. The controller 40 may be adapted to choose the transition time period T, which is associated with a parameter having a value that is closest to the registered or generated value of P. Thus if the registered value of P e.g. is 2.3 s and P_{X2}=2 s and Pₓ₃=3 s, P_{X} is closest to Pₓ₂ is chosen, wherein the transition time period is determined to be T₂, which e.g. may be 0.5 s.

Fig. 3b illustrates an alternative embodiment utilizing the adaptively generated parameter to affect the length of the transition time period wherein several parameters are utilized for determining the length of the transition time period. A first parameter P_{X} may indicate the display time of the current view, and a second parameter P_{Z} may indicate the number of selections made by means of the input device 2 during a predetermined time period, such as 10 s. If the actual display time P_{X} of the current view corresponds to P_{X2} and the number of selections P_{y} made during said predetermined time period corresponds to P_{y2}, the length of the transition time period T is determined to be T₂₂.

In still an alternative embodiment, the generated parameter being a time parameter is directly utilized as the transition time period. If e.g. the display time of a certain view is determined to be 1.2 s, the length of the transition time period is set to 1.2 s. Alternatively, said display time may be suitably weighted and the length of the transition time period determined as a portion of said display time, such as 10 or 20 percent.

Once the length of the transition time period has been set, it may be used for different purposes, such as selecting a certain transition event to be rendered during the transition from the first to the second view. Fig. 4a illustrates how the transition time period may be used for selecting a certain transition event. A plurality of transition events may be stored in the memory 50. Each transition event has a rendering time, which may be different. If only the transition time period is used as input for accessing the memory, the transition event having a rendering time corresponding to, or being closest to, the determined transition time period is selected to be rendered during the transition. The transition events A₁, A₂,...,Aₙ, B₁, B₂,...,Bₙ, ... may have the display times 1, 2,..., n seconds, respectively. Transition events A₁, A₂, .. is a series of transition events having the same theme but with different display times. If the length of the transition time period corresponds to the display time of any of the transition events, any transition event having a corresponding display time may be rendered, e.g. randomly. It is also possible that only one series of transition events A, B,... is provided, wherein the transition event having a display time corresponding to the generated transition time period is selected.

The stored transition events may be associated with several selection parameters. A certain transition event of a plurality of transition events A, B, C, ..., may be dedicated for transitions requested within a certain state of the output device 3. When a transition from the first to the second state is requested, the current state, possibly together with the next state, and the determined transition time period may be input for selecting the transition event. For example, a transition from a first to a second view in the messaging application may require transition event (TE) C to be displayed. If the transition time period T corresponds to a transition event having a display time of T₂, C₂ may be selected to be rendered during the transition.

Fig. 4b illustrates an alternative embodiment for using the determined transition time period. In this embodiment, only one transition event is utilized, but several different transition events are possible, which may be selected e.g. by means of the current state as an input parameter, as described above. In this embodiment, the length of the transition time period, and a transition event A is input into a processing device 55. The processing device 55 may be adapted to alter settings of the transition event A such that the rendering time thereof will correspond to the determined transition time period, wherein an altered transition event A' is outputted from the processing device. The altering may be done e.g. by forwarding to the output device 3 only certain portions of the data of the transition event A, such that it only takes a time period corresponding to the determined transition time period to render said forwarded data. Alternatively, the processing device 55 may be adapted to alter the display time or display speed of the transition event. Thus, all data of the transition event will be displayed, possibly during a shorter or longer time period than originally set depending on the determined transition time period. The memory 50 may forward the transition event to the processing device 55 in response to a control signal, e.g. supplied by the controller 40. The processing device 55 may be provided as a separate processor, or form an integrated part of the controller 40, e.g. as a software implemented unit.

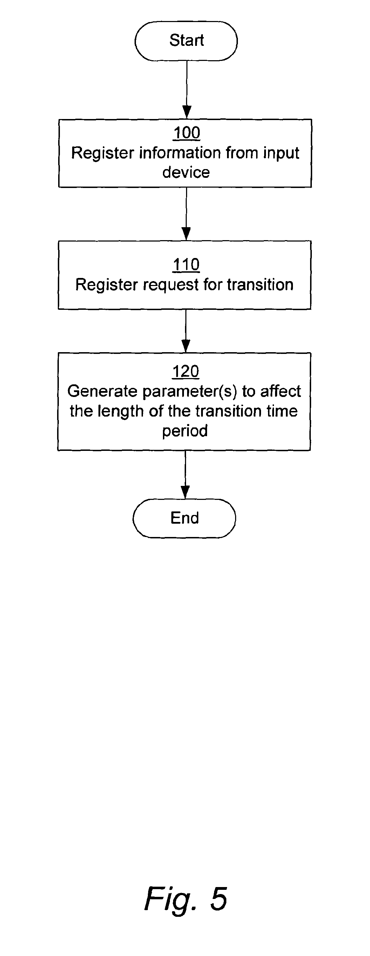

Fig. 5 illustrates one embodiment of the method for operating the electronic device according to the invention. In a first step 100 information from the input device 2, such as a signal generated by interaction between the user and the input device, is registered or received by the registration unit 30. The history of the selections made may be stored for a predetermined period of time, e.g. corresponding to an average session for navigating to a desired application or sub-application. In step 110 a request for a transition from a first to a second state is registered or received. The request may be issued by the user in that he makes a selection in a menu. In connection with the request, one or several parameters, which will affect the length of the transition time period of the transition from the first to the second state, is generated in step 120. The generated parameter may be utilized in a number of different ways to affect the length of the transition time period, as described above. The determined transition time period may be processed e.g. by inputting the transition time period as a parameter for retrieving a transition event from the memory 50, or for altering the rendering time of a transition event, which is retrieved in response to a signal supplied e.g. by the controller 40.

The generated parameters to affect the length of the transition time period may have an indirect effect. A series of transition events having different lengths of the rendering time periods may be associated with a specific parameter, such as the number of choices made during a predetermined time period. Thus, when the parameter has been adaptively generated or determined, e.g. 2 times, the transition event specifying 2 times as a prerequisite for rendering will be selected, wherein the length of the transition time period will be indirectly affected and correspond to the rendering time period of the selected transition event.

The method according to the invention may be executed by computer program code means to make the electronic device execute the method according to the invention when the computer program code means is run by on an electronic device having computer capabilities. The computer program code means may be embodied on a computer readable medium, such as the memory 50.

The invention has been described above in relation to transitions in a mobile telephone 1. However, the invention is applicable in other electronic devices, such as for transitions between slides of an electronic presentation presented by means of a computer on a screen.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method of operating an electronic device (1) comprising an input device (2) and an output device (3), the method comprising:
generating one or several parameters based on information from the input device in connection with a transition from a first state to a second state of the output device (3), wherein said parameters affect the length of a transition time period between said first and second state.

2. The method according to claim 1, wherein said information comprises information of selections of selectable items, said selections being made by means of the input device (2), and said items being presented within views on a display (21) of the electronic device (1).

3. The method according to claim 1 or 2, wherein said information comprises information of a sequence of selections of selectable items, said selections being made by means of the input device (2), and said items being presented within views on a display of the electronic device (1), and wherein said generating comprises comparing said sequence with at least one stored sequence of previously executed selections, and if said sequence match any stored sequence determining the number of times said stored sequence has been executed, said number of times being one of said parameters.

4. The method according to any of the previous claims, wherein said generating comprises determining an interaction frequency of the input device (2) during a predetermined time period, said interaction frequency being one of said parameters.

5. The method according to any of the previous claims, wherein said generating comprises determining a time period during which the output device (3) was in the first state before a request for the transition to the second state was received, said time period being one of said parameters.

6. The method according to claim 5, wherein said generating comprises determining a mean value based on the time period during which the output device (3) was in the first state and a predetermined number of previous states before the request for the transition to the second state was received, said mean value being one of said parameters.

7. The method according to claim 6, wherein the mean value is weighted and said generating comprises weighting said time periods such that the time period during which the output device (3) was in the first state has the largest weight.

8. The method according to any of the previous claims, wherein said generating comprises determining the amount or type of information in a first view presented on a display (21) when the output device (3) is in the first state, said amount or type of information being an additional parameter to affect said length of the transition time period.

9. The method according to any of the previous claims, further comprising using said generated parameters to alter the rendering time of a transition event.

10. The method according to any of the previous claims, further comprising using said generated parameters to select one of a plurality of transition events to be rendered during the transition from the first to the second state, each of the plurality of transition events having a specific rendering time period.

11. The method according to any of the previous claims, wherein said output device is selected from the group comprising: a graphical display (21), a touchscreen, LEDs (22), a loudspeaker (22), and a vibrator (16).

12. The method according to any of the previous claims, wherein said input device is selected from the group comprising: a keyboard, a keypad (11), discrete buttons (14a, 14b, 14c), a touchscreen, LEDs (22), a microphone (10), a joystick (12), a rocker pad, a computer mouse, a remote electronic device and a computer.

13. An electronic device (1), comprising
an input device (2);
an output device (3);
a controller (40) adapted to generate one or several parameters, which are based on information from the input device (2), in connection with a request for a transition from a first state to a second state of the output device (3), said parameters will during operation of the electronic device (1) affect the length of a transition time period for the transition from the first to the second state.

14. The electronic device according to claim 13, further comprising a registration unit (30), which is adapted to register said information, which is based on at least one selection of a selectable item when said selection is executed by means of the input device (2) and said item is displayed within one or several views on a display (21) of the electronic device (1).

15. The electronic device according to claim 14, wherein a registration unit (30) is adapted to register said information, which is based on a sequence of selections of selectable items when said selections are executed by means of the input device (2) and said items are displayed within one or several views on a display (21) of the electronic device (1).

16. The electronic device according to claim 14, wherein the controller (40) is adapted to compare said sequence with at least one stored sequence of previously executed selections, and if said specific sequence match any stored sequence to determine the number of times said stored sequence has been executed, said number of times being one of said parameters.

17. The electronic device according to any of the claims 13-16, wherein the controller (40) is adapted to determine, based on said information, an interaction frequency of the input device (2) during a predetermined time period, said interaction frequency being one of said parameters.

18. The electronic device according to any of the claims 13-17, wherein the controller (40) is adapted to determine a time period during which the output device (3) was in the first state before the request for the transition to the second state was received, said time period being one of said parameters.

19. The electronic device according to claim 18, wherein the controller (40) is adapted to determine a mean value based on the time period during which the output device (3) was in the first state and a predetermined number of previous states before the request for the transition from the first to the second state was received, and to weight the mean value such that the time period during which the output device (3) was in the first state has the largest weight.

20. The electronic device according to any of the claims 13-19, wherein the controller (40) is adapted to determine the amount or type of information presented in a display (21) when the output device (3) is in the first state, said amount or type of information being an additional parameter to affect said length of the transition time period.

21. The electronic device according to any of the claims 13-20, wherein the controller (40) is adapted to use said generated parameters to select one of a plurality of transition events to be displayed during the transition from the first to the second state, and wherein each of the plurality of transition events has a specific rendering time period.

22. The electronic device according to any of the claims 14-21, comprising a processing unit (55) adapted to use said generated parameters to alter the length of the rendering time of a transition event.

23. The electronic device according to any of the claims 13-22, wherein the input device is a graphical display (21), a touchscreen, LEDs (22), a loudspeaker (22), or a vibrator (16).

24. The electronic device according to any of the claims 13-23, wherein the output device is a a keyboard, a keypad (11), discrete buttons (14a, 14b, 14c), a touchscreen, LEDs (22), a microphone (10), a joystick (12), a rocker pad, a vibrator (16), an input member of a remote electronic device, a computer mouse or a computer.

25. The electronic device according to any of the claims 13-24, wherein the electronic device is a mobile radio terminal, a pager, a communicator, an electronic organizer, a smartphone, a personal digital assistant, or a computer.

26. The electronic device according to any of the claims 13-24, wherein the electronic device is a mobile telephone (1).

27. A computer program product comprising computer program code means to execute the method according to claim 1 when said computer program code means is run by an electronic device (1) having computer capabilities.

28. The computer program product according to claim 27, wherein the computer program code means is embodied on a computer readable medium (50).
